# EUROPÄISCHE PATENTSCHRIFT

(11) **EP 3 649 693 B1**
(45) Veröffentlichungstag und Bekanntmachung des Hinweises auf die Patenterteilung: **30.06.2021**
(21) Anmeldenummer: 18782694.6
(22) Anmeldetag: 01.10.2018
(51) Int. Cl.: H01M 8/04119, B60L 50/72, B60K 1/04, B60K 13/04, B60L 50/71

(54) **FAHRZEUG MIT EINEM BRENNSTOFFZELLENSYSTEM UND VERFAHREN ZUR BEHANDLUNG EINES AUS DEM BRENNSTOFFZELLENSYSTEM AUSTRETENDEN FLUIDS**
VEHICLE HAVING A FUEL CELL SYSTEM, AND METHOD FOR TREATING A FLUID EMERGING FROM THE FUEL CELL SYSTEM
VÉHICULE AYANT UN SYSTÈME DE PILES À COMBUSTIBLE ET PROCÉDÉ DE TRAITEMENT D'UN FLUIDE SORTANT DU SYSTÈME DE PILES À COMBUSTIBLE

(30) Priorität: 05.12.2017 DE 102017221896
(43) Veröffentlichungstag der Anmeldung: 13.05.2020
(73) Patentinhaber: Audi AG, 85045 Ingolstadt (DE)
(72) Erfinder: LICHIUS, Thomas, 85080 Gaimersheim (DE); BÖLL, Herbert, 85051 Ingolstadt (DE); WEIS, Johannes, 85057 Ingolstadt (DE); WEUSTENFELD, Thomas, 11435 New York (US)
(86) Internationale Anmeldenummer: PCT/EP2018/076589
(87) Internationale Veröffentlichungsnummer: WO 2019/110165

(56) Entgegenhaltungen:
- DE-A1- 19 918 849
- DE-A1-102011 114 721
- US-A1- 2007 077 473
- COSTAMAGNA P ET AL: "Quantum jumps in the PEMFC science and technology from the 1960s to the year 2000 - Part II. Engineering, technology development and application aspects", JOURNAL OF POWER SOU, ELSEVIER SA, CH, Bd. 102, Nr. 1-2, Dezember 2001 (2001-12), Seiten 253-269, XP004331044, ISSN: 0378-7753, DOI: 10.1016/S0378-7753(01)00808-4

## Beschreibung

Die Erfindung betrifft ein Fahrzeug mit einem Vorderwagen gemäß dem Oberbegriff des Anspruchs 1.

Die Erfindung betrifft darüber hinaus ein Verfahren zur Behandlung eines Fluids eines einen Brennstoffzellenstapel aufweisenden Brennstoffzellensystems bei einem Fahrzeug.

Ein Fahrzeug gemäß des Oberbegriffs des Anspruchs 1 ist beispielsweise aus der US 2007/077473 A1 bekannt, bei der eine Sorptionsanlage zur Speicherung von Wärme verwendet wird, um das Kathodengas bei kalten Temperaturen erwärmen zu können und so das Brennstoffzellensystem auch bei kalten Temperaturen starten zu können.

Ein Brennstoffzellensystem mit einer Sorptionsanlage zum Speichern und Erwärmen von Kathodengas wird ebenso in der DE 10 2011 114 721 A1 offenbart.

Weiterhin ist die US 2016/0064765 A1 bekannt.
Nachteilig im Stand der Technik ist, dass bei geringen Geschwindigkeiten des Fahrzeugs oder insbesondere beim Stillstand das aus dem Brennstoffzellensystem austretende Fluid oder auch der austretende, heiße Wasserdampf auf Fußgänger geblasen werden könnte. Daher wird in der Praxis die Abgasleitung nicht seitlich sondern an einem Heck aus dem Fahrzeugkörper geführt. Eine solche zum Heck geführte Abgasleitung benötigt allerdings viel Bauraum. Zudem muss die Abgasleitung bei einem Brennstoffzellenfahrzeug um eine in einem Unterboden des Fahrzeugs integrierte Batterie herumgelegt werden.

Es ist daher die Aufgabe der vorliegenden Erfindung, ein Fahrzeug und ein Verfahren der eingangs genannten Art dahingehend weiterzubilden, dass die oben genannten Nachteile reduziert werden.

Die das Fahrzeug betreffende Aufgabe wird durch ein Fahrzeug mit den Merkmalen des Anspruchs 1 gelöst. Insbesondere ist es vorgesehen, dass die Abgasanlage verstellbar ist zwischen einer Adsorptionskonfiguration in der das die Flüssigkeit enthaltende Fluid der Sorptionsanlage zuführbar und damit die Flüssigkeit durch diese adsorbierbar ist und einer Durchlasskonfiguration, in der das die Flüssigkeit enthaltende Fluid aus dem Vorderwagen abführbar ist. Dabei weist die Abgasanlage die Adsorptionskonfiguration dann auf, wenn das Fahrzeug eine vorgegebene oder vorgebbare Grenzgeschwindigkeit unterschreitet, insbesondere also beim Stillstand des Fahrzeugs. Weiterhin weist die Abgasanlage die Durchlasskonfiguration auf, sobald das Fahrzeug eine vorgegebene oder vorgebbare Grenzgeschwindigkeit überschreitet, insbesondere also dann, wenn das Fahrzeug in Bewegung ist. Dies ermöglicht längere Zeitintervalle, in denen die Sorptionsanlage adsorbierfähig oder auch beladbar/einsatzfähig ist. Eine Abgabe des Fluids oder auch von Wasserdampf während der Fahrt, mithin bei Überschreiten einer Grenzgeschwindigkeit, ist unbedenklich.

Durch die Sorptionsanlage ist es nun möglich, die Flüssigkeit des Fluids mittels Adsorption an eine Adsorptionsoberfläche der Sorptionsanlage zu binden. Dadurch kann die Abgasleitung aus dem Vorderwagen, insbesondere seitlich zur Längsrichtung aus einem den Vorderwagen umfassenden Fahrzeugkörper geführt werden, ohne die in der Nähe des Fahrzeugs befindlichen Personen zu gefährden. Es ist auch möglich, die Abgasleitung nach vorne, d.h. in Längsrichtung des Fahrzeugs oder des Fahrzeugkörpers aus dem Vorderwagen auszuleiten. Ein Abführen des Abgases nach oben und/oder nach unten aus dem Vorderwagen ist ebenfalls möglich. Die Anordnung der Abgasleitung nahe des Brennstoffzellensystem reduziert den für die Abgasanlage und für die Abgasleitung benötigten Bauraum innerhalb des Fahrzeugs erheblich im Vergleich zu einer Abgasanlage, welche unter einem Fahrzeugboden zum Heck geführt wird. Der im Fahrzeug frei werdende Raum kann nun anderweitig genutzt werden. Gleichzeitig führt eine reduzierte Größe der Abgasanlage zu einer Reduzierung des Gesamtgewichts des Fahrzeugs und damit zu einem geringeren Brennstoffverbrauch.

Das Fluid ist dabei definiert als das Fluid, welches aus dem Brennstoffzellenstapel kathodenseitig abgegeben und nicht mehr wieder in den Brennstoffzellenstapel eingespeist wird (z.B. Kathodenabgas). In einer alternativen Ausführungsform ist allerdings auch eine analog gebildete Abgasanlage für ein anodenseitig abgegebenes Anodenfluid möglich.

Der Vorderwagen des Fahrzeugs ist vorzugsweise der Teil des Fahrzeugs, der sich vor dem und/oder bei dem Fahrer oder Beifahrer des Fahrzeugs befindet. Der Vorderwagen kann zugleich den unter dem Fahrgastraum liegenden Bereich umfassen. Ein Hinterwagen ist dementsprechend derjenige Teil des Fahrzeugs, der hinter dem Fahrer oder dem Beifahrer oder dem Fahrgastraum liegt. Alternativ kann der Hinterwagen auch den Teil des Fahrzeugs beschreiben, der sich hinter der hinteren Sitzreihe des Fahrzeugs befindet.

In einer vorteilhaften Ausführungsform ist die Sorptionsanlage als eine Lochscheibe gebildet und in der Abgasleitung angeordnet. Das Sorptionsmaterial ist dabei vorzugsweise als Schüttgut auf die Lochscheibe aufgetragen. In einer alternativen Ausführungsform ist die Sorptionsanlage mit dem Sorptionsmaterial beschichtet. Durch die Ausgestaltung der Sorptionsanlage als Lochscheibe kann die Flüssigkeit des Fluids mittels Adsorption an der Oberfläche der Lochscheibe bzw. an das Sorptionsmaterial binden, während der gasförmige Teil des Fluids nach außen abgegeben werden kann. Das Sorptionsmaterial ist vorzugsweise aus Zeolith, Aktivkohle oder Silicagel gebildet. Die Lochgeometrie ist vorzugsweise so gewählt, dass der Druckverlust minimal ist.

Die Abgasleitung kann vorzugsweise fahrerseitig oder beifahrerseitig aus dem Fahrzeugkörper bzw. aus dem Vorderwagen herausgeführt werden. In einer alternativen Ausführungsform umfasst die Abgasanlage jedoch zwei oder mehrere Abgasleitungen, die jeweils an gegenüberliegenden Seiten seitlich zur Längsrichtung aus dem Fahrzeugkörper oder dem Vorderwagen geführt sind, um das Fluid an die Umgebung abzugeben.

Um die Zeitintervalle zu verlängern und um die benötigte Größe der Sorptionsanlage zu reduzieren, ist es im Rahmen der Erfindung vorgesehen, dass in der Durchlasskonfiguration der Abgasanlage, die in der Sorptionsanlage adsorbierte Flüssigkeit desorbierbar und aus dem Fahrzeugkörper abführbar ist. Die Sorptionsanlage wird dadurch wieder adsorbierfähig und einer Übersättigung des Sorptionsmaterials ist entgegengewirkt. In diesem Zusammenhang ist es von Vorteil, wenn die Abgasanlage ein Heizelement umfasst zum Verdampfen der adsorbierten Flüssigkeit; mithin zum Desorbieren der Flüssigkeit aus dem Sorptionsmaterial. Dabei ist es möglich, dass die Sorptionsanlage aus einem hochohmigen und elektrisch leitenden Material gebildet ist, wodurch das Material der Sorptionsanlage selbst als ein Heizelement fungiert.

Um den für die Abgasanlage benötigten Bauraum weiter zu reduzieren, ist es bevorzugt, wenn die Sorptionsanlage innerhalb der Abgasleitung angeordnet ist, und wenn die Sorptionsanlage verschwenkbar gelagert ist zwischen einer die Abgasanlage in die Adsorptionskonfiguration versetzenden ersten Stellung und einer die Abgasanlage in die Durchlasskonfiguration versetzenden zweiten Stellung. Die Sorptionsanlage ist dabei bevorzugt derart ausgebildet und in der ersten Stellung in der Abgasleitung angeordnet, dass die Innenwandung der Abgasleitung umfangsseitig abgedichtet ist. In der Durchlasskonfiguration, also in der zweiten Stellung der Sorptionsanlage, ist sie vorteilhafterweise an die Innenwandung geschwenkt, so dass das Fluid über die Abgasleitung aus dem Vorderwagen abführbar ist.

In einer alternativen Ausführungsform ist es vorgesehen, dass die Abgasanlage eine mit der Abgasleitung verbundene und aus dem Vorderwagen oder dem vorderen Teil des Fahrzeugkörpers geführte Bypassleitung umfasst, in welcher ein Stellglied angeordnet ist, das verstellbar ist zwischen einer die Abgasanlage in die Adsorptionskonfiguration versetzenden ersten Position und einer die Abgasanlage in die Durchlasskonfiguration versetzenden zweiten Position. Dies stellt eine besonders robuste Abgasanlage bereit, da nun die Sorptionsanlage fest im Strömungsquerschnitt der Abgasleitung angeordnet sein kann. In der ersten Position des Stellglieds ist die Bypassleitung geschlossen und das Fluid wird der Sorptionsanlage zugeführt. In der zweiten Position des Stellglieds ist die Bypassleitung geöffnet und das Fluid wird der Bypassleitung zugeführt. Das Stellglied kann dabei als eine Klappe oder als ein Ventil gebildet sein. Alternativ können das Stellglied oder auch ein zusätzliches Stellmittel in der Abgasleitung angeordnet sein.

Um die Menge an Flüssigkeit im Fluid weiter zu reduzieren, ist es insbesondere vorgesehen, dass der Brennstoffzellenstapel kathodenaustrittsseitig über eine Kathodenabgasleitung mit einem Befeuchter verbunden ist, mit dem befeuchteraustrittsseitig die die Sorptionsanlage umfassende Abgasanlage zumindest mittelbar verbunden ist. Über die Kathodenabgasleitung gelangt nicht reagiertes Kathodengas und Produktwasser zum Befeuchter. Im Befeuchter wird das Produktwasser zum Befeuchten des Kathodengases verwendet und das befeuchtete Kathodengas wieder den Kathoden zugeführt. Dies reduziert die Menge an Produktwasser und damit die Flüssigkeitsmenge im Fluid bevor es zur Sorptionsanlage gelangt.

Die das Verfahren betreffende Aufgabe wird durch ein Verfahren mit dem Merkmalsbestand des Anspruchs 7 gelöst. Insbesondere also durch ein Verfahren zur Behandlung eines Fluids eines einen Brennstoffzellenstapel aufweisenden Brennstoffzellensystems bei einem Fahrzeug mit einem Vorderwagen, insbesondere mit einem sich in Längsrichtung erstreckenden Fahrzeugkörper, wobei eine eine Sorptionsanlage aufweisende Abgasanlage vorgesehen ist, die kathodenseitig zumindest mittelbar mit dem Brennstoffzellenstapel verbunden ist, wobei das Verfahren folgende Schritte umfasst:
a) Zuführen des eine Flüssigkeit enthaltenden Fluids des Brennstoffzellensystems an die Abgasanlage, und
b) Verstellen der Abgasanlage in eine Adsorptionskonfiguration und dadurch Adsorbieren der Flüssigkeit des Fluids mittels der Sorptionsanlage bei Unterschreiten einer vorgegebenen oder vorgebbaren Grenzgeschwindigkeit des Fahrzeugs, oder
c) Verstellen der Abgasanlage in eine Durchlasskonfiguration und dadurch Abführen des Fluids mittels der Abgasanlage aus einem Vorderwagen des Fahrzeugs bei Überschreitung einer vorgegebenen oder vorgebbaren Grenzgeschwindigkeit.

Hierdurch wird verhindert, dass bei Stillstand oder bei langsamer Fahrt des Fahrzeugs Wasserdampf oder eine Flüssigkeit oder ein Fluid auf neben dem Fahrzeug befindliche Passanten geleitet wird. Durch das Verstellen der Abgasanlage in die Durchlasskonfiguration wird das Fluid während der Fahrt aus dem Fahrzeugkörper oder dem Vorderwagen abgeführt. Dies ermöglicht es, die Sorptionsanlage kleiner zu gestalten, da die Sorptionsanlage nur bei Unterschreiten der Grenzgeschwindigkeit verwendet wird bzw. Flüssigkeit adsorbiert.

Um die Abgasleitung und die Sorptionsanlage noch kleiner gestalten zu können, ist es insbesondere vorgesehen, dass in der Durchlasskonfiguration die in der Sorptionsanlage adsorbierte Flüssigkeit desorbiert und/oder abgeführt wird.

Durch diese Desorption wird die Sorptionsanlage wieder "entladen", d.h. die Flüssigkeitsmoleküle binden nicht mehr an der Oberfläche der Sorptionsanlage. Dies verlängert das Zeitintervall der Adsorptionsfähigkeit und wirkt einer Übersättigung der Sorptionsanlage entgegen. Vorteilhafterweise umfasst das Verfahren zusätzlich ein Verdampfen der desorbierten Flüssigkeit.

In einer Ausführungsform ist vorgesehen, dass das Verfahren, die folgenden weiteren Schritte umfasst:
- Verstellen der Abgasanlage in die Adsorptionskonfiguration durch Verschwenken der innerhalb einer Abgasleitung der Abgasanlage angeordneten Sorptionsanlage in eine erste Stellung oder
- Verstellen der Abgasanlage in die Durchlasskonfiguration durch Verschwenken der innerhalb einer Abgasleitung der Abgasanlage angeordneten Sorptionsanlage in eine zweite Stellung.

In der ersten Stellung ist die Sorptionsanlage bevorzugt in einer Querschnittsebene der Abgasleitung orientiert angeordnet. Vorzugsweise dichtet die Sorptionsanlage die Abgasleitung umfangsseitig ab.

In einer alternativen Ausführungsform ist es vorteilhaft, wenn das Verfahren die folgenden weiteren Schritte umfasst:
- Verstellen der Abgasanlage in die Adsorptionskonfiguration durch Verschließen einer mit einer Abgasleitung der Abgasanlage verbundenen Bypassleitung, oder,
- Verstellen der Abgasanlage in die Durchlasskonfiguration durch Öffnen einer mit der Abgasleitung der Abgasanlage verbundenen Bypassleitung, und Desorbieren und/oder Abführen der in der Sorptionsanlage adsorbierten Flüssigkeit und/oder des Fluids über die Bypassleitung aus dem Vorderwagen oder dem Fahrzeugkörper des Fahrzeugs.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer ersten Ausführungsform des erfindungsgemäßen Fahrzeugs,
- Fig. 2: eine schematische Darstellung einer ersten Ausführungsform der erfindungsgemäßen Abgasanlage in einem Fahrzeug,
- Fig. 3: eine schematische Darstellung der zweiten Ausführungsform der erfindungsgemäßen Abgasanlage in einem Fahrzeug,
- Fig. 4a): einen Ausschnitt der Abgasanlage der ersten Ausführungsform in der Adsorptionskonfiguration,
- Fig. 4b): einen Ausschnitt der Abgasanlage der ersten Ausführungsform in der Durchlasskonfiguration,
- Fig. 5a): einen Ausschnitt der Abgasanlage der zweiten Ausführungsform in der Adsorptionskonfiguration und
- Fig. 5b): einen Ausschnitt der Abgasanlage der zweiten Ausführungsform in der Durchlasskonfiguration.

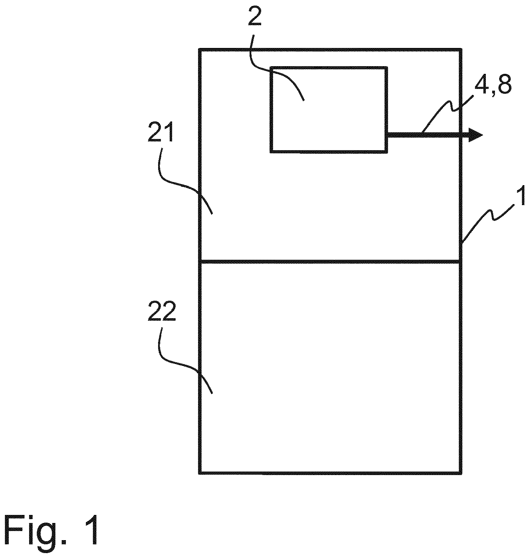

Fig. 1 zeigt eine schematische Darstellung des Fahrzeugs mit einem sich in einer Längsrichtung erstreckenden Fahrzeugkörper 1, der einen Hinterwagen 22 und einen Vorderwagen 21 umfasst. Im Vorderwagen 21 ist ein Brennstoffzellensystem 2 angeordnet. Das Brennstoffzellensystem 2 umfasst einen in Fig. 1 nicht dargestellten Brennstoffzellenstapel 3, welcher kathodenseitig 21 zumindest mittelbar mit einer Abgasleitung 4 verbunden ist. Durch die Abgasleitung 4 ist ein aus dem Brennstoffzellenstapel 3 austretendes Fluid aus dem Vorderwagen 21 und damit aus dem Fahrzeugkörper 1 abführbar. Vorliegend ist das Fluid seitlich zur Längsrichtung aus dem Vorderwagen 21 des Fahrzeugs abführbar.

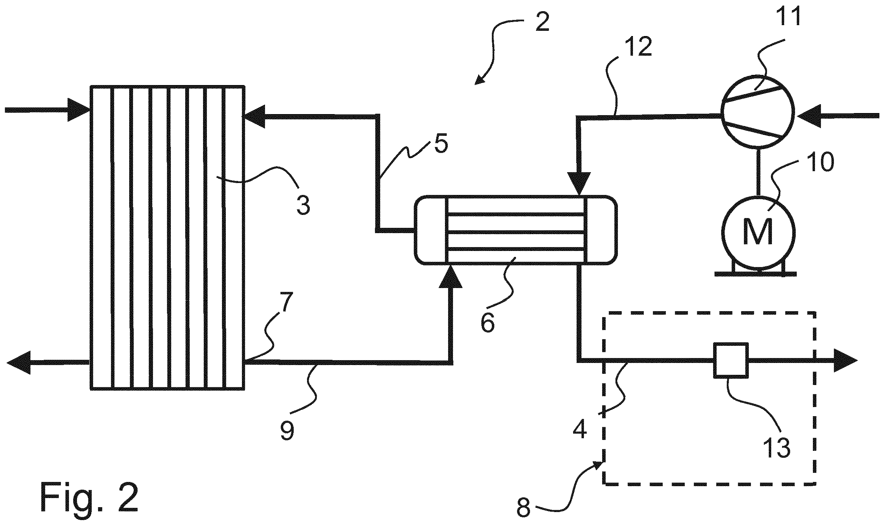

In Fig. 2 ist eine erste Ausführungsform der erfindungsgemäßen Abgasanlage 8 in einem Fahrzeug dargestellt. Kathodenseitig wird das Kathodengas über einen mittels eines Antriebs 10 angetriebenen Verdichter 11 an einen Befeuchter 6 über eine Trockenzufuhrleitung 12 geleitet. Im Befeuchter 6 wird das Kathodengas befeuchtet und über eine Feuchtzufuhrleitung 5 in die Kathodenräume des Brennstoffzellenstapels 3 geführt. Am Kathodenaustritt 7 wird nicht reagiertes Kathodengas und Produktwasser über die Kathodenabgasleitung 9 zum Befeuchter 6 geleitet. Das Kathodengas wird unter anderem mit dem Produktwasser im Befeuchter 6 befeuchtet und den Kathoden zugeführt. Um einer Übersättigung des Befeuchters 6 entgegenzuwirken wird ein Teil des nicht reagierten Kathodengases und des Produktwassers als Fluid über die Abgasleitung 4 seitlich zur Längsachse oder zur Längsrichtung aus dem Fahrzeugkörper 1 geführt.

Die Abgasleitung 4 ist als Teil einer Abgasanlage 8 zu erachten, die eine Sorptionsanlage 13 umfasst zur Adsorption einer Flüssigkeit eines aus dem Brennstoffzellenstapel 3 austretenden Fluids. Die Sorptionsanlage 13 ist vorliegend als eine Lochscheibe gebildet, auf der Sorptionsmaterial, beispielsweise in Form von Schüttgut, aufgebracht ist. Die Abgasanlage 8 ist verstellbar zwischen einer Adsorptionskonfiguration und einer Durchlasskonfiguration. In der Adsorptionskonfiguration ist das aus den Kathodenräumen strömende und die Flüssigkeit enthaltende Fluid der Sorptionsanlage 13 zuführbar. Dabei wird die Flüssigkeit durch die Sorptionsanlage 13 adsorbiert. In der Durchlasskonfiguration ist das die Flüssigkeit enthaltende Fluid aus dem dem Vorderwagen 21, vorliegend aus dem Fahrzeugkörper 1, seitlich zur Längsrichtung des Fahrzeugs abführbar. Bevorzugt ist die Sorptionsanlage 13 zusätzlich ausgestaltet, adsorbierte Flüssigkeit in der Durchlasskonfiguration zu desorbieren, womit sie ebenfalls aus dem Vorderwagen 21 des Fahrzeugkörpers 1 ausgeführt werden kann.

In der ersten Ausführungsform ist die Sorptionsanlage 13 innerhalb der Abgasleitung 4 angeordnet und verschwenkbar gelagert zwischen einer die Abgasanlage 8 in die Adsorptionskonfiguration versetzenden ersten Stellung 14 und einer die Abgasanlage 8 in die Durchlasskonfiguration versetzenden zweiten Stellung 15.

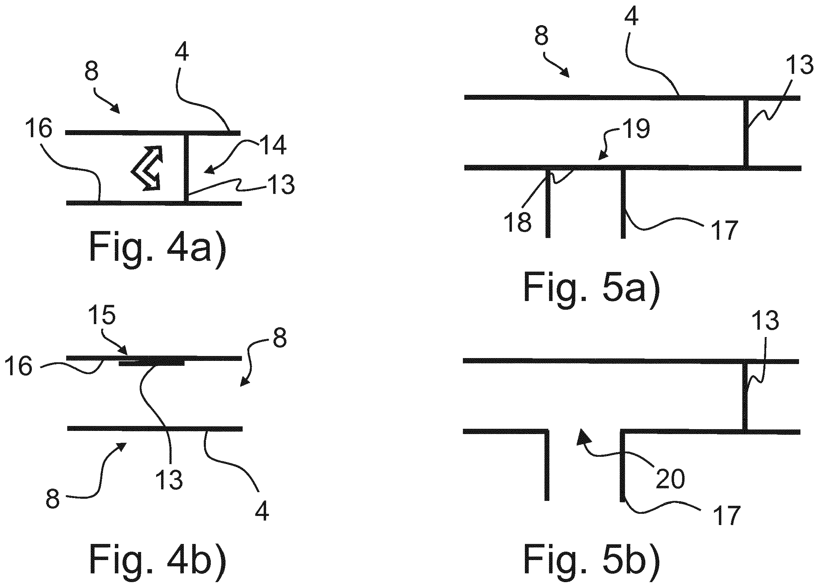

In Fig. 4a) ist ein Ausschnitt der Abgasanlage mit der Sorptionsanlage 13 in der ersten Stellung 14 dargestellt. Die Abgasanlage 8 weist hierbei die Adsorptionskonfiguration auf. Die Sorptionsanlage 13 ist vorzugsweise ausgebildet und in der Abgasleitung 8 derart angeordnet, dass in der ersten Stellung 14 eine Innenwandung 16 der Abgasleitung 4 umfangsseitig abgedichtet ist. Die Sorptionsanlage 13 ist also derart in den Strömungsquerschnitt der Abgasleitung 4 geschwenkt, dass umfangsseitig zwischen der Sorptionsanlage 13 und der Abgasleitung 4 kein Fluid durchtreten kann. Die Strömung des Fluids erfolgt damit zwangsweise zur Sorptionsanlage 13. Die Flüssigkeit im Fluid wird in der Sorptionsanlage 13 adsorbiert. Vorzugsweise ist die Sorptionsanlage 13 dabei aber für den gasförmigen Teil des Fluids durchlässig.

Fig. 4b) zeigt einen Ausschnitt der Abgasanlage 8 in der Durchlasskonfiguration, in der sich die Sorptionsanlage 13 in der zweiten Stellung 15 befindet. Die Sorptionsanlage 13 ist zur Innenwandung 16 der Abgasleitung 4 verschwenkt und liegt vorzugsweise an ihr an. Somit wird die Abgasleitung 4 für ein Durchströmen des aus den Kathodenräumen stammenden Fluids freigegeben.

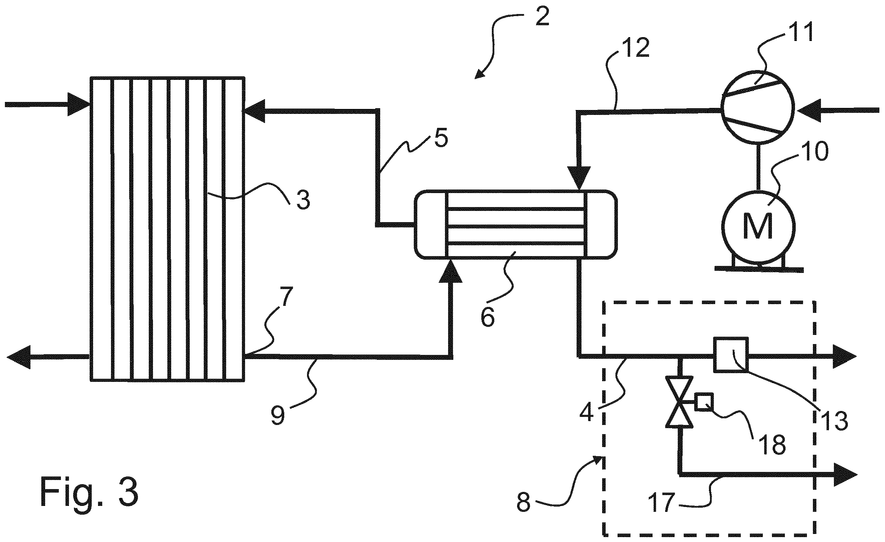

Fig. 3 zeigt eine zweite Ausführungsform des erfindungsgemäßen Fahrzeugs, wobei die Abgasanlage 8 eine mit der Abgasleitung 4 verbundene und aus dem Vorderwagen 21 geführte, insbesondere seitlich zur Längsrichtung des Fahrzeugkörpers 1 orientierte, Bypassleitung 17 umfasst. In der Bypassleitung 17 ist ein als Ventil gebildetes Stellglied 18 angeordnet. Dieses ist verstellbar zwischen einer die Abgasanlage 8 in die Adsorptionskonfiguration versetzenden ersten Position 19 und einer die Abgasanlage 8 in die Durchlasskonfiguration versetzenden zweiten Position 20.

Ein Ausschnitt der Abgasanlage 8 der zweiten Ausführungsform in der Adsorptionskonfiguration ist in Fig. 5a) dargestellt. Diese zeigt das Stellglied 18 in einer die Bypassleitung 17 verschließenden ersten Position 19. Das Fluid wird hierbei der Sorptionsanlage 13 zugeführt, wobei dessen Flüssigkeit adsorbiert wird. Fig. 5b) zeigt das Stellglied 18 in der die Bypassleitung 17 freigebenden zweiten Position 20. Das aus den Kathodenräumen strömende Fluid ist hierbei über die Bypassleitung 17 aus dem Vorderwagen 21 geführt. Die zweite Position 20 des Stellglieds 18 entspricht also der Durchlasskonfiguration der Abgasanlage 8. Zusätzlich kann die adsorbierte Flüssigkeit unter Einsatz eines der Sorptionsanlage 13 zugeordneten Heizelements desorbiert und ebenfalls über die Bypassleitung 17 und/oder die Abgasleitung 4 aus dem Fahrzeug an die Umgebung abgeleitet werden. In diesem Zusammenhang kann die Flüssigkeit auch verdampft werden, so dass der Dampf - anstelle einer Flüssigkeit - aus dem Fahrzeug geführt wird.

In einer nicht näher dargestellten Ausführungsform ist das Stellglied 18 in der Abgasleitung 17 derart angeordnet, dass die Bypassleitung 17 in der ersten Position 19 des Stellglieds 18 verschlossen ist. Der zur Sorptionsanlage 13 führende und als Sorptionsleitung gebildete Abschnitt der Abgasleitung 8 ist aber geöffnet oder zugänglich, so dass Flüssigkeit in der Sorptionsanlage 13 adsorbiert wird. In der zweiten Position 20 ist die Bypassleitung 17 geöffnet oder freigegeben, wobei die Sorptionsleitung geschlossen ist. Nun wird die durch die Sorptionsanlage 13 adsorbierte Flüssigkeit desorbiert und über die Abgasleitung 8 aus dem Vorderwagen 21, insbesondere seitlich zur Längsrichtung des Fahrzeugkörpers 1 geleitet. Dabei kann die desorbierte Flüssigkeit außerdem mittels eines nicht näher dargestellten Heizelements der Sorptionsanlage 13 verdampft werden, so dass nunmehr der Dampf - anstelle einer Flüssigkeit - über die Abgasleitung 8 an die Umgebung abgegeben wird.

Das erfindungsgemäße Verfahren läuft wie folgt ab: Das eine Flüssigkeit enthaltende Fluid des Brennstoffzellensystems 2 wird der Abgasanlage 8 zugeführt. Die Abgasanlage 8 wird bei Unterschreiten einer vorgegebenen oder einer vorgebbaren Grenzgeschwindigkeit des Fahrzeugs in die Adsorptionskonfiguration verstellt, so dass die Flüssigkeit des Fluids durch die Sorptionsanlage 13 adsorbiert wird. Spätestens jedoch beim Stillstand oder beim Anhalten des Fahrzeugs wird die Abgasanlage 8 in die Adsorptionskonfiguration überführt. Dieser Vorgang kann beispielsweise mittels eines nicht näher gezeigten Controllers gesteuert werden.

Das Verstellen der Abgasanlage 8 in die Adsorptionskonfiguration erfolgt bei der gezeigten ersten Ausführungsform, indem die Sorptionsanlage 13 in den Strömungsquerschnitt der Abgasleitung 4 geschwenkt und damit in die erste Stellung 14 verstellt wird. Das Verstellen der Abgasanlage 8 in die Adsorptionskonfiguration erfolgt bei der gezeigten zweiten Ausführungsform, indem die Bypassleitung 17 mittels des Stellglieds 18 geschlossen wird.

Überschreitet das Fahrzeug eine vorgegebene oder vorgebbare Grenzgeschwindigkeit, so wird die Abgasanlage 8 in die Durchlasskonfiguration verstellt, wodurch das Fluid mittels der Abgasanlage 8 vorzugsweise seitlich zur Längsrichtung des Fahrzeugkörpers 1 aus dem Vorderwagen 21 abgeführt wird. Vorzugsweise wird gleichzeitig die in der Sorptionsanlage 13 adsorbierte Flüssigkeit desorbiert und über eine nicht näher gezeigte Heizeinheit - vorzugsweise dampfförmig - abgeführt.

Bei der ersten Ausführungsform erfolgt das Verstellen der Abgasanlage 8 in die Durchlasskonfiguration durch Verschwenken der Sorptionsanlage 13 innerhalb der Abgasleitung 4 in die zweite Stellung 15. Bei der zweiten Ausführungsform erfolgt das Verstellen der Abgasanlage 8 in die Durchlasskonfiguration durch Öffnen oder Freigeben der Bypassleitung 17 mittels des Stellglieds 18. Vorzugsweise wird dabei desorbierte Flüssigkeit und/oder das Fluid über die Bypassleitung 17 aus dem Vorderwagen 21 geleitet.

### BEZUGSZEICHENLISTE:

- 1: Fahrzeugkörper
- 2: Brennstoffzellensystem
- 3: Brennstoffzellenstapel
- 4: Abgasleitung
- 5: Feuchtzufuhrleitung
- 6: Befeuchter
- 7: Kathodenaustritt
- 8: Abgasanlage
- 9: Kathodenabgasleitung
- 10: Antrieb
- 11: Verdichter
- 12: Trockenzufuhrleitung
- 13: Sorptionsanlage
- 14: Erste Stellung
- 15: Zweite Stellung
- 16: Innenwandung
- 17: Bypassleitung
- 18: Stellglied
- 19: Erste Position
- 20: Zweite Position
- 21: Vorderwagen
- 22: Hinterwagen

## Patentansprüche

1. Fahrzeug mit einem Vorderwagen (21) und mit einem einen Brennstoffzellenstapel (3) aufweisenden Brennstoffzellensystem (2), das kathodenseitig zumindest mittelbar mit einer Abgasleitung (4) verbunden ist, durch welche ein aus dem Brennstoffzellenstapel (3) austretendes Fluid abführbar ist, wobei die Abgasleitung (4) einer Abgasanlage (8) zugeordnet ist, und die Abgasanlage (8) eine Sorptionsanlage (13) umfasst zur Adsorption einer Flüssigkeit des aus dem Brennstoffzellenstapel (3) austretenden Fluids, wobei die Abgasanlage (8) verstellbar ist zwischen einer Adsorptionskonfiguration, in der das die Flüssigkeit enthaltende Fluid der Sorptionsanlage (13) zuführbar und damit die Flüssigkeit durch diese adsorbierbar ist, und einer Durchlasskonfiguration, in der das die Flüssigkeit enthaltende Fluid abführbar ist, **dadurch gekennzeichnet, dass** das Brennstoffzellensystem (2) im Vorderwagen (21) angeordnet ist, dass in der Durchlasskonfiguration das aus dem Brennstoffzellenstapel (3) austretende Fluid aus dem Vorderwagen (21) abführbar ist, und dass die Abgasanlage (8) bei Unterschreiten einer vorgegebenen oder vorgebbaren Grenzgeschwindigkeit die Adsorptionskonfiguration und bei Überschreiten einer vorgegebenen oder vorgebbaren Grenzgeschwindigkeit die Durchlasskonfiguration aufweist.

2. Fahrzeug nach Anspruch 1, **dadurch gekennzeichnet, dass** in der Durchlasskonfiguration der Abgasanlage (8) die in der Sorptionsanlage (13) adsorbierte Flüssigkeit desorbierbar und aus dem Vorderwagen (21) abführbar ist.

3. Fahrzeug nach Anspruch 1 oder 2, **dadurch gekennzeichnet, dass** die Sorptionsanlage (13) innerhalb der Abgasleitung (4) angeordnet ist, und dass die Sorptionsanlage (13) verschwenkbar gelagert ist zwischen einer die Abgasanlage (8) in die Adsorptionskonfiguration versetzenden ersten Stellung (14) und einer die Abgasanlage (8) in die Durchlasskonfiguration versetzenden zweiten Stellung (15).

4. Fahrzeug nach Anspruch 1 oder 2, **dadurch gekennzeichnet, dass** die Abgasanlage (8) eine mit der Abgasleitung (4) verbundene und aus dem Vorderwagen (21) geführte Bypassleitung (17) umfasst, in welcher ein Stellglied (18) angeordnet ist, das verstellbar ist zwischen einer die Abgasanlage (8) in die Adsorptionskonfiguration versetzenden ersten Position (19) und einer die Abgasanlage (8) in die Durchlasskonfiguration versetzenden zweiten Position (20).

5. Fahrzeug nach einem der Ansprüche 1 bis 4, **dadurch gekennzeichnet, dass** der Brennstoffzellenstapel (3) kathodenaustrittsseitig (7) über eine Kathodenabgasleitung (9) mit einem Befeuchter (6) verbunden ist, mit dem befeuchteraustrittsseitig die die Sorptionsanlage (13) umfassende Abgasanlage (8) zumindest mittelbar verbunden ist.

6. Verfahren zur Behandlung eines Fluids eines einen Brennstoffzellenstapel (3) aufweisenden Brennstoffzellensystems (2) bei einem Fahrzeug mit einem Vorderwagen (21), wobei eine eine Sorptionsanlage (13) aufweisende Abgasanlage vorgesehen ist, die kathodenseitig zumindest mittelbar mit dem Brennstoffzellenstapel (3) verbunden ist, dieses umfassend die folgenden Schritte:
a) Zuführen des eine Flüssigkeit enthaltenden Fluids des Brennstoffzellensystems (2) an die Abgasanlage (8), und
b) Verstellen der Abgasanlage (8) in eine Adsorptionskonfiguration und dadurch Adsorbieren der Flüssigkeit des Fluids mittels der Sorptionsanlage (13) bei Unterschreiten einer vorgegebenen oder vorgebbaren Grenzgeschwindigkeit des Fahrzeugs, oder
c) Verstellen der Abgasanlage (8) in eine Durchlasskonfiguration und dadurch Abführen des Fluids mittels der Abgasanlage (8) aus dem Vorderwagen (21) des Fahrzeugs bei Überschreitung einer vorgegebenen oder vorgebbaren Grenzgeschwindigkeit.

7. Verfahren nach Anspruch 6, **dadurch gekennzeichnet, dass** in der Durchlasskonfiguration die in der Sorptionsanlage (13) adsorbierte Flüssigkeit desorbiert und/oder abgeführt wird.

8. Verfahren nach Anspruch 6 oder 7, **gekennzeichnet durch**:
- Verstellen der Abgasanlage (8) in die Adsorptionskonfiguration durch Verschwenken der innerhalb einer Abgasleitung (4) der Abgasanlage (8) angeordneten Sorptionsanlage (13) in eine erste Stellung (14) oder
- Verstellen der Abgasanlage (8) in die Durchlasskonfiguration durch Verschwenken der innerhalb einer Abgasleitung (4) der Abgasanlage (8) angeordneten Sorptionsanlage (13) in eine zweite Stellung (15).

9. Verfahren nach Anspruch 6 oder 7, **gekennzeichnet durch**:
- Verstellen der Abgasanlage (8) in die Adsorptionskonfiguration durch Verschließen einer mit einer Abgasleitung (4) der Abgasanlage (8) verbundenen Bypassleitung (17), oder,
- Verstellen der Abgasanlage (8) in die Durchlasskonfiguration durch Öffnen einer mit der Abgasleitung (4) der Abgasanlage (8) verbundenen Bypassleitung (17), und Desorbieren und/oder Abführen der in der Sorptionsanlage (13) adsorbierten Flüssigkeit und/oder des Fluids über die Bypassleitung (17) aus dem Vorderwagen (21) des Fahrzeugs.

## Claims

1. Vehicle having a front end (21) and having a fuel cell system (2) which has a fuel cell stack (3), which fuel cell system is, at a cathode side, connected at least indirectly to an exhaust-gas line (4) through which a fluid emerging from the fuel cell stack (3) can be discharged, wherein the exhaust-gas line (4) is associated with an exhaust-gas system (8), and the exhaust-gas system (8) comprises a sorption system (13) for the adsorption of a liquid of the fluid emerging from the fuel cell stack (3), wherein the exhaust system (8) can be shifted between an adsorption configuration in which the fluid containing the liquid can be supplied to the sorption system (13) and thus the liquid can be adsorbed by the latter, and a passage configuration in which the fluid containing the liquid can be discharged, **characterised in that** the fuel cell system (2) is arranged in the front end (21), that fluid emerging from the fuel cell stack (3) can be discharged from the front end (21) in the passage configuration, and that the exhaust system (8) has the adsorption configuration when the speed is less than a predetermined or predeterminable limit speed and has the passage configuration when a predetermined or predeterminable limit speed is exceeded.

2. Vehicle according to claim 1, **characterised in that**, in the passage configuration of the exhaust system (8), the liquid adsorbed in the sorption system (13) can be desorbed and discharged from the front end (21).

3. Vehicle according to claim 1 or 2, **characterised in that** the sorption system (13) is arranged inside the exhaust-gas line (4), and the sorption system (13) is mounted so as to be pivotable between a first position (14) which moves the exhaust system (8) into the adsorption configuration, and a second position (15) which moves the exhaust system (8) into the passage configuration.

4. Vehicle according to claim 1 or 2, **characterised in that** the exhaust system (8) comprises a bypass line (17) which is connected to the exhaust-gas line (4) and is routed out of the front end (21) and in which an actuator (18) is arranged, which actuator can be shifted between a first position (19) which moves the exhaust system (8) into the adsorption configuration, and a second position (20) which moves the exhaust system (8) into the passage configuration.

5. Vehicle according to any of claims 1 to 4, **characterised in that** the fuel cell stack (3) is connected at a cathode outlet end (7) via a cathode exhaust-gas line (9) to a humidifier (6), to which the exhaust system (8) comprising the sorption system (13) is at least indirectly connected at the humidifier outlet end.

6. Method for treating a fluid of a fuel cell system (2) having a fuel cell stack (3) in a vehicle having a front end (21), wherein an exhaust system having a sorption system (13) is provided which is connected at a cathode side at least indirectly to the fuel cell stack (3), comprising the following steps:
a) supplying the liquid-containing fluid of the fuel cell system (2) to the exhaust system (8), and
b) shifting the exhaust system (8) into an adsorption configuration and thereby adsorbing the liquid of the fluid by means of the sorption system (13) when the speed is less than a predetermined or predeterminable limit speed of the vehicle, or
c) shifting the exhaust system (8) into a passage configuration and thereby discharging the fluid by means of the exhaust system (8) from the front end (21) of the vehicle when a predetermined or predeterminable limit speed is exceeded.

7. Method according to claim 6, **characterised in that**, in the passage configuration, the fluid adsorbed in the sorption system (13) is desorbed and/or discharged.

8. Method according to claim 6 or 7, **characterised by**:
- shifting the exhaust system (8) into the adsorption configuration by pivoting the sorption system (13) arranged inside an exhaust-gas line (4) of the exhaust system (8) into a first position (14), or
- shifting the exhaust system (8) into the passage configuration by pivoting the sorption system (13) arranged inside an exhaust-gas line (4) of the exhaust system (8) into a second position (15).

9. Method according to claim 6 or 7, **characterised by**:
- shifting the exhaust system (8) into the adsorption configuration by closing a bypass line (17) connected to an exhaust-gas line (4) of the exhaust system (8), or
- shifting the exhaust system (8) into the passage configuration by opening a bypass line (17) connected to the exhaust-gas line (4) of the exhaust system (8), and desorbing and/or discharging the liquid adsorbed in the sorption system (13) and/or the fluid from the front end (21) of the vehicle via the bypass line (17).

## Revendications

1. Véhicule avec une partie avant (21) et avec un système de piles à combustible (2) présentant un empilement de piles à combustible (3), qui est relié du côté cathode au moins indirectement à une conduite de gaz d'échappement (4), par laquelle un fluide sortant de l'empilement de piles à combustible (3) peut être évacué, dans lequel la conduite de gaz d'échappement (4) est associée à un système de gaz d'échappement (8), et le système de gaz d'échappement (8) comprend un système de sorption (13) destiné à adsorber un liquide du fluide sortant de l'empilement de piles à combustible (3), dans lequel le système de gaz d'échappement (8) est réglable entre une configuration d'adsorption, dans laquelle le fluide contenant le liquide peut être amené au système de sorption (13) et peut ainsi être adsorbé par celui-ci, et une configuration de passage, dans laquelle le fluide contenant le liquide peut être évacué, **caractérisé en ce que** le système de piles à combustible (2) est disposé dans la partie avant (21), que dans la configuration de passage, le fluide sortant de l'empilement de piles à combustible (3) peut être évacué de la partie avant (21), et que le système de gaz d'échappement (8), lorsqu'une vitesse limite prédéfinie ou pouvant être prédéfinie n'est pas atteinte, présente la configuration d'adsorption, et lorsqu'une vitesse limite prédéfinie ou pouvant être prédéfinie est dépassée, présente la configuration de passage.

2. Véhicule selon la revendication 1, **caractérisé en ce que** dans la configuration de passage du système de gaz d'échappement (8), le liquide adsorbé dans le système de sorption (13) peut être désorbé et peut être évacué de la partie avant (21).

3. Véhicule selon la revendication 1 ou 2, **caractérisé en ce que** le système de sorption (13) est disposé à l'intérieur de la conduite de gaz d'échappement (4), et que le système de sorption (13) est monté de manière à pouvoir pivoter entre une première position (14) amenant le système de gaz d'échappement (8) dans la configuration d'adsorption et une deuxième position (15) amenant le système de gaz d'échappement (8) dans la configuration de passage.

4. Véhicule selon la revendication 1 ou 2, **caractérisé en ce que** le système de gaz d'échappement (8) comprend une conduite de dérivation (17) reliée à la conduite de gaz d'échappement (4) et guidée à l'extérieur de la partie avant (21), dans laquelle est disposé un actionneur (18), qui est mobile entre une première position (19) amenant le système de gaz d'échappement (8) dans la configuration d'adsorption et une deuxième position (20) amenant le système de gaz d'échappement (8) dans la configuration de passage.

5. Véhicule selon l'une quelconque des revendications 1 à 4, **caractérisé en ce que** l'empilement de piles à combustible (3) est relié du côté sortie de cathode (7) par l'intermédiaire d'une conduite de gaz d'échappement de cathode (9) à un humidificateur (6), auquel du côté sortie d'humidificateur le système de gaz d'échappement (8) comprenant le système de sorption (13) est relié au moins indirectement.

6. Procédé pour le traitement d'un fluide d'un système de piles à combustible (2) présentant un empilement de piles à combustible (3) pour un véhicule avec une partie avant (21), dans lequel un système de gaz d'échappement présentant un système de sorption (13) est prévu, qui est relié du côté cathode au moins indirectement à l'empilement de piles à combustible (3), celui-ci comprenant les étapes suivantes :
a) une amenée du fluide, contenant un liquide, du système de piles à combustible (2) au système de gaz d'échappement (8), et
b) un déplacement du système de gaz d'échappement (8) dans une configuration d'adsorption et de ce fait une adsorption du liquide du fluide au moyen du système de sorption (13) lorsqu'une vitesse limite prédéfinie ou pouvant être prédéfinie du véhicule n'est pas atteinte, ou
c) un déplacement du système de gaz d'échappement (8) dans une configuration de passage et de ce fait une évacuation du fluide au moyen du système de gaz d'échappement (8) de la partie avant (21) du véhicule lorsqu'une vitesse limite prédéfinie ou pouvant être prédéfinie est dépassée.

7. Procédé selon la revendication 6, **caractérisé en ce que**, dans la configuration de passage, le liquide adsorbé dans le système de sorption (13) est désorbé et/ou évacué.

8. Procédé selon la revendication 6 ou 7, **caractérisé par** :
- un déplacement du système de gaz d'échappement (8) dans la configuration d'adsorption par pivotement du système de sorption (13) disposé à l'intérieur d'une conduite de gaz d'échappement (4) du système de gaz d'échappement (8) dans une première position (14) ou
- un déplacement du système de gaz d'échappement (8) dans la configuration de passage par pivotement du système de sorption (13) disposé à l'intérieur d'une conduite de gaz d'échappement (4) du système de gaz d'échappement (8) dans une deuxième position (15).

9. Procédé selon la revendication 6 ou 7, **caractérisé par** :
- un déplacement du système de gaz d'échappement (8) dans la configuration d'adsorption par fermeture d'une conduite de dérivation (17) reliée à une conduite de gaz d'échappement (4) du système de gaz d'échappement (8), ou,
- un déplacement du système de gaz d'échappement (8) dans la configuration de passage par ouverture d'une conduite de dérivation (17) reliée à la conduite de gaz d'échappement (4) du système de gaz d'échappement (8), et une désorption et/ou une évacuation du liquide adsorbé dans le système de sorption (13) et/ou du fluide de la partie avant (21) du véhicule par l'intermédiaire de la conduite de dérivation (17).
